# FASCICULE DE BREVET EUROPEEN

(11) **EP 2 065 318 B1**
(45) Date de publication et mention de la délivrance du brevet: **01.06.2011**
(21) Numéro de dépôt: 08305837.0
(22) Date de dépôt: 25.11.2008
(51) Int. Cl.: B65G 15/32, B65G 23/06, F16G 1/28

(54) **Structure à bande ou courroie pour la manutention de produits ou la transmission de mouvements et la bande ou courroie sans fin associée à une telle structure**
Bandstruktur für die Handhabung von Produkten oder die Übertragung von Bewegungen und entsprechendes Endlosband für eine solche Struktur
Structure with band or belt for handling products or transmitting movement and endless belt or band associated with such a structure

(30) Priorité: 30.11.2007 FR 0708371
(43) Date de publication de la demande: 03.06.2009
(73) Titulaire: Boursier Manutention Transmission Service, 44360 Vigneux de Bretagne (FR)
(72) Inventeur: BOUSIER, Marcel, 44310, SAINT COLOMBAN (FR)
(74) Mandataire: Michelet, Alain

(56) Documents cités:
- US-A- 3 853 016
- US-A- 3 948 110
- US-A- 4 634 409

## Description

La présente invention concerne le domaine général du convoyage de produits ou de la transmission de mouvements. Elle concerne plus particulièrement une structure à bande ou courroie sans fin qui s'enroule autour d'au moins deux structures de renvoi d'extrémités dont l'une au moins est en forme de pignon motorisé selon le préambule de la revendication 1; elle concerne encore la bande ou la courroie sans fin qui est associée à une telle structure selon la préambule de la revendication 5.

Il existe de très nombreux types différents de convoyeurs ou d'organes de transmission de mouvements. Certains d'entre eux ont des structures très simples, mais présentent des défauts en termes de guidage ou d'entraînement de la bande ou de la courroie sans fin mise en oeuvre. D'autres, de conception plus complexe, permettent d'assurer un entraînement et un guidage corrects de cette bande ou courroie, mais ils ont alors un coût de revient élevé, posent des problèmes d'hygiène et ne sont pas faciles à nettoyer. Une telle structure à bande est décrit dans le document US-A-4 634 409.

La présente invention propose une nouvelle structure de conception simple mais assurant néanmoins d'excellents guidages et entraînements de la bande ou courroie mise en oeuvre, que ce soit pour de petites ou de grandes dimensions de pignons d'entraînement.

L'invention a pour objet une structure à bande ou courroie selon la revendication 1.

Selon une autre particularité, les plots de chaque couple sont distants l'un de l'autre de manière à préserver un jeu latéral à l'âme du pignon moteur, de l'ordre de 1 à 5 mm.

D'autre part, la structure comporte avantageusement une bande de convoyage qui est associée à une sole de soutien munie de moyens de guidage le long des faces latérales extérieures des plots monoblocs.

En outre, le pas entre les couples de plots, au repos, est de préférence prévu légèrement inférieur à l'entraxe des dents du pignon moteur, pour tenir compte de l'allongement de la bande sous charge.

L'invention concerne encore la bande ou la courroie réalisée par extrusion calandrage de matière plastique et qui est munie, sur sa face inférieure, de plots de centrage et d'entraînement tels que décrits ci-dessus.

Avantageusement, la bande ou la courroie sans fin correspondante comprend des plots monoblocs dont les faces transversales avant et arrière sont raccordées par une face d'extrémité arrondie, et dont les angles qui raccordent lesdites faces transversales et les faces latérales intérieures et extérieures, ainsi que les angles qui raccordent lesdites faces latérales intérieures et extérieures et ladite face d'extrémité, sont également arrondis.

Selon d'autres particularités :
- la face latérale intérieure des plots monoblocs est inclinée d'un angle compris entre 10 et 20° (de préférence voisin de 15°) par rapport à la perpendiculaire des faces de dessus et de dessous de la bande ou courroie,
- les faces transversales avant et arrière des plots monoblocs sont inclinées d'un angle compris entre 10 et 20° (de préférence voisin de 15°) par rapport à la perpendiculaire des faces de dessus et de dessous de la bande ou courroie, et
- la bande ou courroie sans fin intègre des fils ou des câbles longitudinaux en matériau résistant à l'allongement, lesdits fils ou câbles étant noyés dans sa partie plane, en nombre adapté et judicieusement répartis, pour obtenir une structure souple et à la fois résistante à l'allongement.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue schématique de côté qui montre une structure de convoyeur sans fin conforme à l'invention ;
- la figure 2 est une vue en perspective partielle qui montre la coopération du pignon moteur de la structure de convoyeur illustrée figure 1, avec les plots monoblocs qui équipent la face inférieure de la bande sans fin ;
- la figure 3 est une vue en perspective partielle de la face de dessous de la bande sans fin détaillant les plots monoblocs de guidage et d'entraînement ;
- la figure 4 est une vue en coupe transversale de la bande sans fin, selon 4-4 de la figure 3;
- la figure 5 est une vue en coupe longitudinale de la bande sans fin selon 5-5 de la figure 3;
- la figure 6 est une vue en coupe transversale de la bande sans fin avec sa sole support.

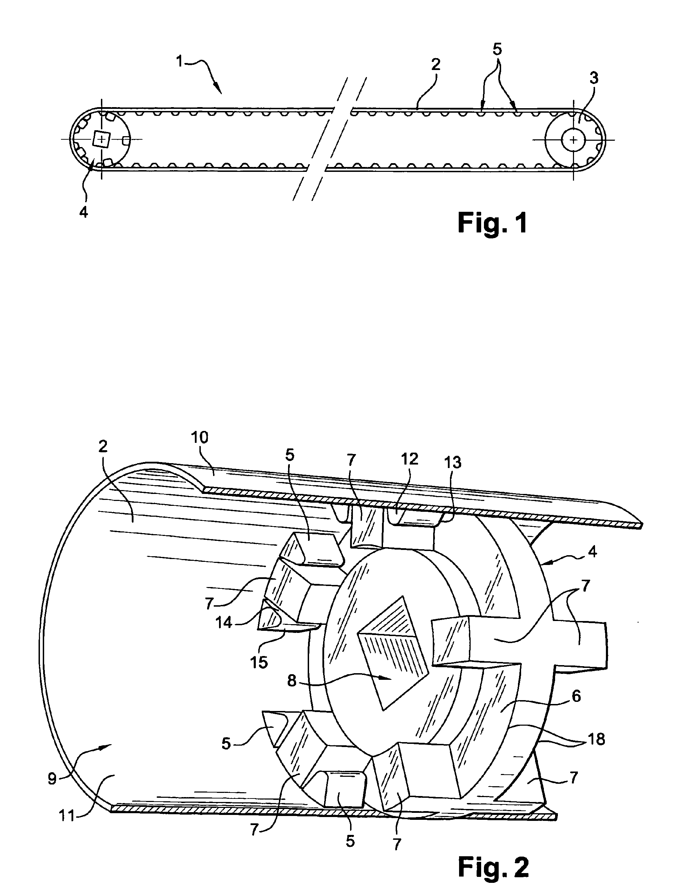

La figure 1 montre une structure de convoyeur sans fin 1 destiné par exemple à la manutention de produits. Cette structure de convoyeur 1 est ici constituée d'une bande sans fin 2 qui s'enroule sur deux structures de renvoi d'extrémités 3 et 4. L'une de ces structures de renvoi 3 est un simple disque d'enroulement ; l'autre 4 est en forme de pignon moteur qui assure l'entraînement et le guidage transversal de la bande sans fin 2, ceci par l'intermédiaire de plots monoblocs 5 aménagés en saillie à partir de la face de dessous de ladite bande 2.

Tel que détaillé sur la figure 2, le pignon moteur 4 est constitué d'une âme centrale cylindrique 6, en forme de disque, dont les deux faces latérales sont équipées de dents 7 en saillie. L'âme 6 sert de guide à la bande 2 équipée des plots 5 ; les dents 7 assurent l'entrainement de la bande 2 grâce aux plots 5. En l'occurrence, chaque face latérale de l'âme centrale 6 comporte ici cinq dents 7 régulièrement réparties ; les dents 7 de chaque face sont disposées en vis-à-vis.

Au centre du pignon 4, on remarque la présence d'un orifice 8 à section carrée destiné à coopérer avec un arbre d'entraînement de section complémentaire (non représenté), associé à une motorisation classique (d'autres formes de réalisations sont possibles pour assurer cette liaison en rotation : sections rondes clavetées, hexagonales ...).

La bande sans fin 2 s'enroule autour du pignon moteur 4 et les dents 7 de ce dernier viennent coopérer avec les plots monoblocs 5 précités pour assurer la fonction d'entraînement recherchée. Comme on le verra ci-après, les plots monoblocs 5 sont organisés par couples pour coopérer avec les couples de dents 7 situés de part et d'autre de l'âme centrale 6 du pignon 4. En outre, le pas p des plots 5 est adapté pour que les couples de dents 7 coopèrent avec les couples de plots 5 successifs, ou pour que les couples de dents 7 coopèrent avec un couple de plots 5 sur deux (tel qu'illustré sur la figure 2) ou encore coopèrent avec un couple de plots 5 sur trois.

Le pignon moteur 4 est réalisé par moulage de matière plastique du genre polyéthylène haute densité, par exemple. Le disque d'enroulement 3 est réalisé de la même manière. Il ne comporte cependant pas de dents 7 et il est monté fou en rotation sur un arbre circulaire (ou claveté sur un arbre tournant).

La bande sans fin 2 est réalisée par une opération d'extrusion calandrage de matière plastique du genre polyuréthane ou polyester. Cette opération d'extrusion calandrage est mise en oeuvre par deux cylindres presseurs entre lesquels passe la matière plastique, l'un des deux cylindres étant lisse et l'autre étant muni d'empreintes en creux correspondant à la forme des plots 5.

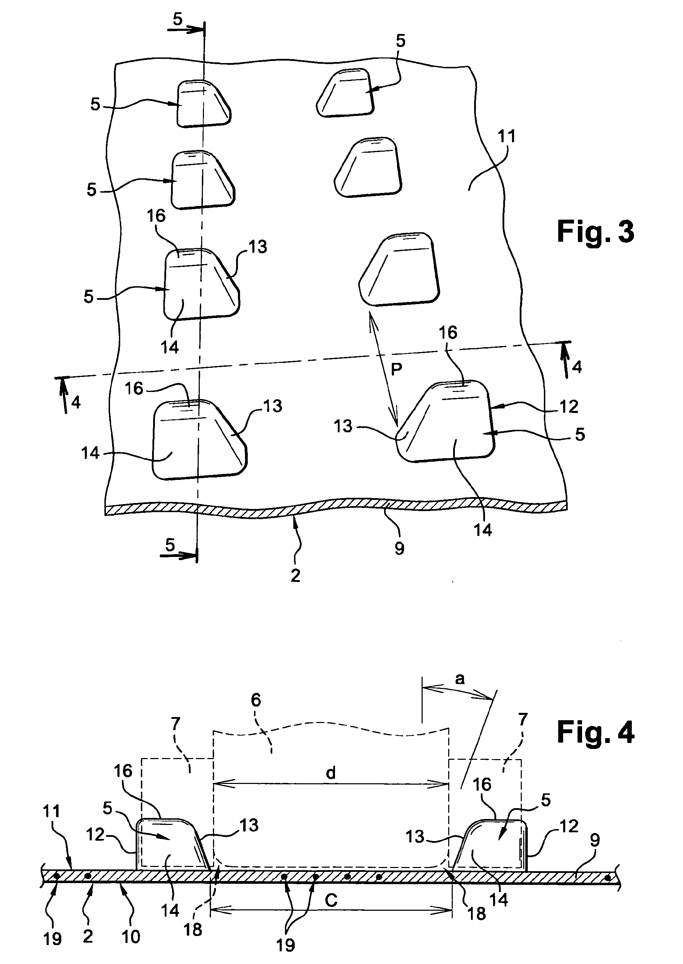

La structure et l'organisation des plots monoblocs 5 est détaillée sur les figures 3 à 5.

La bande sans fin 2 comporte une partie plane 9 dont la face de dessus 10 est destinée à recevoir les produits que l'on souhaite convoyer et/ou traiter. La face de dessous 11 de la partie plane 9, parallèle à ladite face de dessus 10, comporte les plots monoblocs 5.

Ces plots 5 sont organisés par couples sur la largeur de la partie plane 9, et ceci sur toute la longueur de ladite partie plane 9, selon des lignes parallèles entre elles.

Le pas p entre les différents couples de plots 5, et les dimension et structure générale des plots 5, sont adaptés selon les dimensions de la structure de convoyage, et en particulier selon les dimensions du pignon d'entraînement 4 et de son nombre de dents 7.

Chaque plot 5 est délimité par :
- une face latérale 12, dite « extérieure » du fait de son positionnement du côté des bordures latérales de la bande sans fin 2,
- une face latérale 13, dite « intérieure », orientée du côté de la face latérale 13 « intérieure » du plot monobloc 5 du même couple,
- une face transversale 14 dite « avant », en fonction du sens d'avancement de la bande sans fin 2,
- une face transversale 15 dite « arrière », toujours en fonction du sens d'avancement de la bande sans fin, et
- une face d'extrémité 16.

La face latérale extérieure 12 de chaque plot monobloc 5 s'étend parallèlement aux bordures latérales de la bande sans fin 2, et perpendiculairement aux faces de dessus 10 et de dessous 11 de la partie plane 9 (figures 3 et 4). Comme on peut le voir également sur les figures 3 et 4, leur face latérale intérieure 13 s'étend de manière inclinée par rapport à la perpendiculaire de la partie plane 9 de la bande, et ceci de telle sorte que les deux faces latérales intérieures 13 en vis-à-vis des deux plots 5 du même couple s'étendent de manière divergente. L'angle d'inclinaison correspondant a (figure 4) est avantageusement compris entre 10 et 20° ; il est de préférence voisin de 15°.

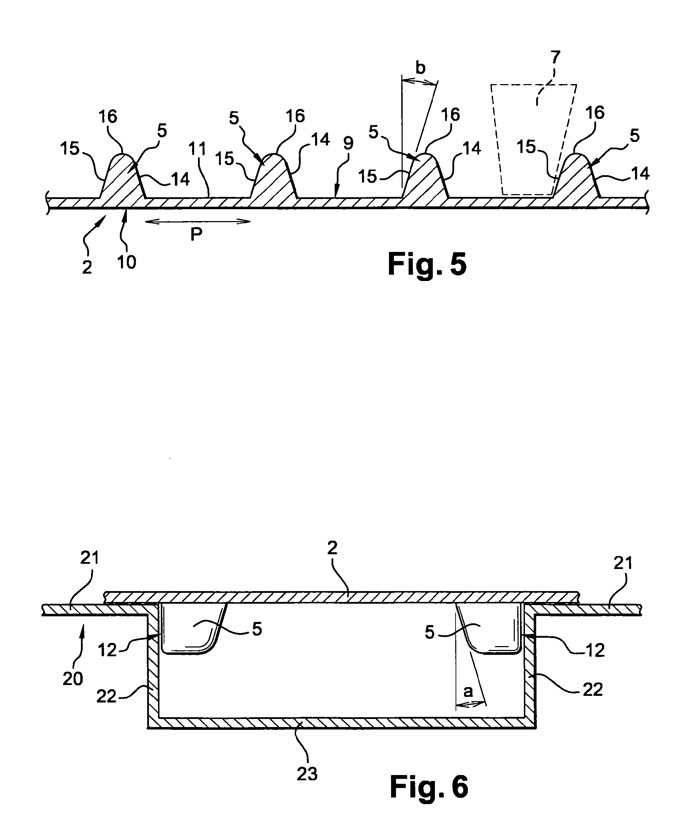

Les faces transversales avant 14 et arrière 15 raccordent lesdites faces latérales intérieure 13 et extérieure 12. Comme on peut le voir sur la figure 5, ces faces transversales 14 et 15 s'étendent de manière inclinée par rapport à la perpendiculaire de la partie plane 9, et ceci de manière convergente. L'angle d'inclinaison correspondant b est avantageusement compris entre 10 et 20° ; de préférence, il est voisin de 15°.
Les quatre angles qui raccordent les faces transversales avant 14 et arrière 15 et les faces latérales intérieure 13 et extérieure 12 sont arrondis, tout comme les angles qui raccordent lesdites faces latérales 12 et 13 avec la face d'extrémité 16, cette dernière raccordant lesdites faces transversales 14 et 15 de manière arrondie (figure 5).

L'écartement ou la distance c entre les faces latérales intérieures 13 des deux plots 5 de chaque couple (au niveau de la base des plots) est fonction de la largeur d de l'âme centrale 6 du pignon moteur 4. Cet écartement c est de préférence adapté pour que l'âme 6 du pignon 4 dispose d'un jeu latéral de l'ordre de 1 à 5 mm.

En fonctionnement, l'âme centrale 6 du pignon moteur 4 transite dans le couloir formé entre les plots 5 de chaque couple ; les deux faces inclinées 13 en vis-à-vis des plots 5 de chaque couple de plots coopèrent avec la périphérie de cette âme centrale 6, entre les couples de dents 7, de manière à réaliser un guidage transversal de la bande sans fin 2. L'inclinaison des faces latérales intérieures 13 optimise le guidage correspondant.
De préférence, les deux arêtes circulaires 18 de l'âme centrale 6 du pignon 4 sont arrondies, encore pour optimiser ce guidage.

D'autre part, les dents 7 du pignon moteur 4 viennent prendre appui sur la face transversale arrière 15 des plots 5 de chaque couple, ou d'un couple sur deux ou trois (en fonction des dimensions du pignon 4 et de son nombre de dents) de manière à assurer l'entraînement de la bande sans fin 2.
L'inclinaison de la face 15 optimise ce contact d'entraînement. Toujours dans un but d'optimisation, les dents 7 du pignon moteur 4 sont conformées de manière à ce que leur face d'entraînement coopère selon un contact le plus plat possible avec les plots d'entraînement 5, comme illustré en pointillés sur la figure 5. Les angles arrondis mentionnés ci-dessus optimisent également l'entraînement.

La même inclinaison des faces transversales avant 14 et arrière 15 des plots 5 assure la réversibilité de la bande sans fin 2. D'autre part, en relation avec l'inclinaison de la face latérale intérieure 13 et les arrondis précités, cela facilite le démoulage des plots lors de l'opération d'extrusion calandrage.

On notera que la partie plane 9 de la bande 2 peut intégrer des fils ou des câbles longitudinaux 19 (figure 4), noyés dans la masse lors de l'opération d'extrusion calandrage, adaptés pour limiter les possibilités d'allongement longitudinal de ladite bande 2. Ces fils ou câbles 19 sont réalisés en un matériau résistant à l'allongement, genre kevlar (marque déposée) par exemple. Leur nombre et leur positionnement sont adaptés judicieusement en fonction des applications, pour obtenir une bande 2 résistante à l'allongement tout en restant souple, apte en particulier à s'enrouler sur de faibles diamètres.

Comme on l'a représenté sur la figure 6, le brin supérieur de la bande sans fin de convoyage 2 est avantageusement associé à une sole support fixe 20, laquelle sole 20 est aménagée pour venir coopérer avec la face latérale externe 12 des plots 5, de manière à compléter le guidage transversal de ladite bande 2.
En l'occurrence, la partie active 21 de la sole 20 sur laquelle repose la majeure partie du brin supérieur de la bande sans fin 2 se prolonge vers le bas par des retours à l'équerre 22 dont l'écartement correspond, à un jeu de quelques millimètres près, à l'écartement entre les faces latérales extérieures 12 des plots 5 de chaque couple. Le jeu correspondant peut être compris entre 1 et 5 mm, selon les exigences de précision recherchées.
Les deux retours 22 de la sole 20 peuvent être reliés par un élément de liaison monobloc 23.

Au repos, le pas p entre les couples de plots 5 est avantageusement prévu légèrement inférieur à l'entraxe des dents 7 du pignon moteur 4, de manière à tenir compte de l'allongement sous charge de la bande 2 en matière plastique.

On obtient ainsi une structure de convoyage particulièrement simple à réaliser, ceci à un coût très économique, et qui assure au surplus un excellent entraînement et un bon guidage latéral de la bande sans fin. La structure de convoyage en question, une fois montée, ne nécessite plus de réglage ; l'usure de la bande sans fin et du pignon moteur est relativement lente ; en outre, cette structure est très facile à nettoyer et elle peut être réalisée avec des matières répondant aux normes alimentaires.

D'une manière générale, la largeur de la bande sans fin sera adaptée selon le type de produit à transporter. En cas de besoin, plusieurs pignons moteurs 4 peuvent être juxtaposés pour assurer le guidage et l'entraînement de la bande ; dans ce cas, une ligne de couples de plots monoblocs 5 sera prévue pour chaque pignon d'entraînement 4.

D'autre part, on comprend bien que la même structure de pignon d'entraînement et de bande sans fin peut être envisagée pour la conception d'une installation de transmission de mouvements par courroie. Dans ce cas, la face inférieure de la courroie correspondante comportera les couples de plots monoblocs de guidage et d'entraînement décrits ci-dessus.

## Revendications

1. Structure à bande ou courroie pour la manutention de produits ou la transmission de mouvements, laquelle structure comprend une bande ou courroie sans fin (2) qui s'enroule autour d'au moins deux structures de renvoi d'extrémités (3, 4) dont l'une au moins est en forme de pignon motorisé (4) ledit pignon motorisé (4) est constitué d'une âme centrale (6) en forme de disque circulaire muni de dents d'entraînement (7) réparties en vis-à-vis sur la périphérie de chacune de ses faces, et ladite bande ou courroie (2) est constituée d'une partie plane (9) en matière plastique extrudée calandrée, comprenant une face de dessus (10) et une face de dessous (11), ladite face de dessous (11) comprenant des successions de couples de plots (5) obtenus monoblocs avec ladite partie plane (9) lors de l'opération d'extrusion calandrage, les deux plots (5) de chaque couple étant séparés l'un de l'autre, et les différents couples de plots (5) étant positionnés sur la largeur de ladite partie plane (9), ceci sur des lignes parallèles entre elles, de sorte que l'âme centrale (6) dudit pignon d'entraînement (4) circule entre les plots (5) de chaque couple et assure ainsi un guidage transversal de ladite bande ou courroie (2), et de sorte que les dents latérales (7) dudit pignon moteur (4) viennent prendre appui sur la face arrière (15) desdits plots (5), pour assurer l'entraînement de ladite bande ou courroie (2), chacun desdits plots monoblocs (5) étant délimité par quatre faces planes ou sensiblement planes périphériques : l'une latérale extérieure (12), une autre latérale intérieure (13), une autre transversale avant (14) et une dernière transversale arrière (15),
- ladite face latérale intérieure (13) s'étendant de manière inclinée par rapport à la perpendiculaire des faces de dessus (10) et de dessous (11) de ladite bande ou courroie (2), les deux faces latérales intérieures (13) en vis-à-vis des deux plots (5) du même couple s'étendant de manière divergente et étant adaptées pour coopérer avec la périphérie de l'âme centrale (6) du pignon motorisé (4), entre deux dents d'entraînement (7) de ce dernier, de manière à réaliser le guidage transversal de ladite bande ou courroie (2),
- lesdites faces transversales avant (14) et arrière (15) qui raccordent lesdites faces latérales intérieures (13) et extérieures (12) s'étendant de manière inclinée par rapport à la perpendiculaire des faces de dessus (10) et de dessous (11) de ladite bande ou courroie (2), ceci de manière convergente, en particulier pour optimiser la coopération des plots (5) avec lesdites structures de renvoi (3, 4) et notamment avec les dents (7) du pignon moteur (4), **caractérisée en ce que**
ladite face latérale extérieure (12) s'étendant parallèlement aux bordures latérales de la bande ou courroie (2) et perpendiculairement à ses faces de dessus (10) et de dessous (11).

2. Structure à bande ou courroie selon la revendication 1, **caractérisée en ce que** les plots (5) de chaque couple sont distants l'un de l'autre de manière à préserver un jeu latéral à l'âme (6) du pignon moteur (4), de l'ordre de 1 à 5 mm.

3. Structure à bande ou courroie selon l'une quelconque des revendications 1 ou 2, **caractérisée en ce qu'**elle comporte une bande de convoyage (2) associée à une sole de soutien (20) qui est munie de moyens de guidage (22) le long des faces latérales extérieures (12) des plots monoblocs (5).

4. Structure à bande ou courroie selon l'une quelconque des revendications 1 à 3, **caractérisée en ce que** le pas p entre les couples de plots (5), au repos, est prévu légèrement inférieur à l'entraxe des dents (7) du pignon moteur (4), pour tenir compte de l'allongement sous charge de la bande en matière plastique (2).

5. Bande ou courroie sans fin pour une structure selon l'une quelconque des revendications 1 à 4, ladite bande est réalisée par extrusion calandrage de matière plastique et constituée d'une partie plane (9) comprenant une face de dessus (10) et une face de dessous (11) délimitées par des bordures latérales, ladite face de dessous (11) comprenant des successions de couples de plots (5) obtenus monoblocs avec ladite partie plane (9) lors de l'opération d'extrusion calandrage, les deux plots (5) de chaque couple étant séparés l'un de l'autre, et les différents couples de plots (5) étant positionnés sur la largeur de ladite partie plane (9), ceci sur des lignes parallèles entre elles, chacun desdits plots monoblocs (5) étant délimité par quatre faces planes ou sensiblement planes périphériques: l'une latérale extérieure (12), une autre latérale intérieure (13), une autre transversale avant (14) et une dernière transversale arrière (15),
- ladite face latérale intérieure (13) s'étendant de manière inclinée par rapport à la perpendiculaire des faces de dessus (10) et de dessous (11) de ladite bande ou courroie (2), les deux faces latérales intérieures (13) en vis-à-vis des deux plots (5) du même couple s'étendant de manière divergente, et
- lesdites faces transversales avant (14) et arrière (15) qui raccordent lesdites faces latérales intérieure (13) et extérieure (12) s'étendant de manière inclinée par rapport à la perpendiculaire des faces de dessus (10) et de dessous (11) de ladite bande ou courroie (2), ceci de manière convergente, **caractérisée en ce que**
ladite face latérale extérieure (12) s'étendant parallèlement aux bordures latérales de la bande ou courroie (2) et perpendiculairement à ses faces de dessus (10) et de dessous (11).

6. Bande ou courroie sans fin selon la revendication 5, **caractérisée en ce qu'**elle comprend des plots monoblocs (5) dont les faces transversales avant (14) et arrière (15) sont raccordées par une face d'extrémité (16) arrondie, et dont les angles qui raccordent lesdites faces transversales (14, 15) et les faces latérales intérieure (13) et extérieure (12), ainsi que les angles qui raccordent lesdites faces latérales intérieure (13) et extérieure (12) et ladite face d'extrémité (16), sont également arrondis.

7. Bande ou courroie sans fin selon l'une quelconque des revendications 5 ou 6, **caractérisée en ce que** la face latérale intérieure (13) des plots monoblocs (5) est inclinée d'un angle a de l'ordre de 10 à 20° par rapport à la perpendiculaire de ses faces de dessus (10) et de dessous (11).

8. Bande ou courroie sans fin selon la revendication 7, **caractérisée en ce que** la face latérale intérieure (13) des plots monoblocs (5) est inclinée d'un angle a de l'ordre de 15° par rapport à la perpendiculaire de ses faces de dessus (10) et de dessous (11).

9. Bande ou courroie sans fin selon l'une quelconque des revendications 5 à 8, **caractérisée en ce que** les faces transversales avant (14) et arrière (15) des plots monoblocs (5) sont inclinées d'un angle b de l'ordre de 10 à 20°, de préférence voisin de 15°, par rapport à la perpendiculaire des faces de dessus (10) et de dessous (11).

10. Bande ou courroie sans fin selon l'une quelconque des revendications 5 à 9, **caractérisée en ce qu'**elle intègre des fils ou des câbles longitudinaux (19) en matériau résistant à l'allongement, lesdits fils ou câbles étant noyés dans la masse de sa partie plane (9), en nombre adapté et judicieusement répartis, pour obtenir une structure souple et à la fois résistante à l'allongement.

## Claims

1. A band or belt structure for the handling of products or the transmission of movements, said structure comprising an endless band or belt (2) that winds up around at least two end gear structures (3, 4), at least one of which is in the form of a power-driven pinion (4), said power-driven pinion (4) consisting of a circular disk-shaped central core (6) provided with sprocket teeth (7) distributed opposite to each other over the periphery of each faces thereof, and said band or belt (2) consisting of a flat part (9) made of a calendered-extruded plastic material, comprising a top face (10) and a bottom face (11), said bottom face (11) comprising successions of couples of lugs (5) obtained integral with said flat part (9) during the calendering-extrusion operation, the two lugs (5) of each couple being separated from each other, and the different couples of lugs (5) being positioned along the width of said flat part (9), on lines that are parallel to each other, so that the central core (6) of said sprocket pinion runs between the lugs (5) of each couple and thus provides a transverse guiding of said band or belt (2), and so that the lateral teeth (7) of said drive pinion (4) come and rest on the rear face (15) of said lugs (5), in order to provide the driving of said band or belt (2), each of said integral lugs (5) being delimited by four flat or substantially flat peripheral faces: an outer lateral one (12), another inner lateral one (13), another front transverse one (14), and a last rear transverse one (15),
- said inner lateral face (13) extending in an inclined manner with respect to the perpendicular to the top (10) and bottom (11) faces of said band or belt (2), the two inner lateral faces (13) opposite the two lugs (5) of the same couple extending in a diverging manner and being adapted to cooperate with the periphery of the central core (6) of the power-driven pinion (4), between two sprocket teeth (7) of the latter, so as to provide the transverse guiding of said band or belt (2),
- said front (14) and rear (15) transverse faces that connect said inner (13) and outer (14) lateral faces extending in an inclined manner with respect to the perpendicular to the top (10) and bottom (11) faces of said band or belt (2), in a converging manner, in particular to optimize the cooperation of the lugs (5) with said gear structures (3, 4) and in particular with the teeth (7) of the drive pinion (4), **characterized in that**:
said outer lateral face (12) extends parallel to the lateral edges of the band or belt (2) and perpendicular to the top (10) and bottom (11) faces thereof.

2. A band or belt structure according to claim 1, **characterized in that** the lugs (5) of each couple are distant from each other so as to keep a clearance, of the order of 1 to 5 mm, lateral to the core (6) of the drive pinion (4).

3. A band or belt structure according to any one of claims 1 or 2, **characterized in that** it comprises a convoying belt (2) associated with a slider bed (20) that is provided with guiding means (22) along the outer lateral faces (12) of the integral lugs (5).

4. A band or belt structure according to any one of claims 1 to 3, **characterized in that** the pitch p between the couples of lugs (5), at rest, is provided slightly smaller than the teeth interaxial spacing (7) of the drive pinion (4), to take into account the stretch under load of the band (2) made of plastic material.

5. An endless band or belt for a structure according to any one of claims 1 to 4, said band being made by calendering-extrusion of a plastic material and consists of a flat part (9) comprising a top face (10) and a bottom face (11) delimited by lateral edges, said bottom face (11) comprising successions of couples of lugs (5) obtained integral with said flat part (9) during the calendering-extrusion operation, the two lugs (5) of each couple being separated from each other, and the different couples of lugs (5) being positioned along the width of said flat part (9), on lines that are parallel to each other, each of said integral lugs (5) being delimited by four flat or substantially flat peripheral faces: an outer lateral one (12), another inner lateral one (13), another front transverse one (14), and a last rear transverse one (15),
- said inner lateral face (13) extending in an inclined manner with respect to the perpendicular to the top (10) and bottom (11) faces of said band or belt (2), the two inner lateral faces (13) opposite the two lugs (5) of the same couple extending in a diverging manner, and
- said front (14) and rear (15) transverse faces that connect said inner (13) and outer (14) lateral faces extending in an inclined manner with respect to the perpendicular to the top (10) and bottom (11) faces of said band or belt (2), in a converging manner, **characterized in that**:
said outer lateral face (12) extends parallel to the lateral edges of the band or belt (2) and perpendicular to the top (10) and bottom (11) faces thereof.

6. An endless band or belt according to claim 5, **characterized in that** it comprises integral lugs (5), the front (14) and rear (15) transverse faces of which are connected by a rounded end face (16), and in which the angles that connect said transverse faces (14, 15) and the inner (13) and outer (12) lateral faces, as well as the angles that connect said inner (13) and outer (12) lateral faces and said end face (16), are also rounded.

7. An endless band or belt according to any one of claims 5 or 6, **characterized in that** the inner lateral face (13) of the integral lugs (5) is inclined by an angle a of the order of 10 to 20° with respect to the perpendicular to the top (10) and bottom (11) faces thereof.

8. An endless band or belt according to claim 7, **characterized in that** the inner lateral face (13) of the integral lugs (5) is inclined by an angle a of the order of 15° with respect to the perpendicular to the top (10) and bottom (11) faces thereof.

9. An endless band or belt according to any one of claims 5 to 8, **characterized in that** the front (14) and rear (15) transverse faces of the integral lugs (5) are inclined by an angle b of the order of 10 to 20°, preferably close to 15°, with respect to the perpendicular to the top (10) and bottom (11) faces.

10. An endless band or belt according to any one of claims 5 to 9, **characterized in that** it integrates longitudinal wires or cables (19) made of a stretch resistant material, said wires or cables being embedded in the mass of the flat part (9) thereof, in an adapted number and a judiciously distributed arrangement, to obtain a structure that is both flexible and stretch resistant.

## Patentansprüche

1. Band- oder Riemenstruklur für die Handhabung von Produkten oder die Übertragung von Bewegungen, wobei die Struktur ein Endlosband oder einen Endlosriemen (2) aufweist, der sich um mindestens zwei Endumlenkstrukturen (3, 4) wickelt, von welchen mindestens eine die Form eines angetriebenen Ritzels (4) hat, wobei das angetriebene Ritzel (4) aus einer zentralen Seele (6) in Kreisscheibenform besteht, die mit Antriebszähnen (7) versehen ist, die in Gegenüberlage auf dem Umfang jeder ihrer Seiten verteilt sind, und wobei das Band oder der Riemen (2) aus einem flachen Teil (9) aus extrudiertem, kalandertem Kunststoff besteht, der eine Oberseite (10) und eine Unterseite (11) aufweiset, wobei die Unterseite (11) Abfolgen von Paaren von Klötzen (5) aufweist, die aus einem Stück mit dem flachen Teil (9) beim Extrusions-Kalandervorgang erzielt werden, wobei die zwei Klötze (5) jedes Paars voneinander getrennt sind, und wobei die verschiedenen Paare von Klötzen (5) auf der Breite des flachen Teils (9) positioniert sind, und dies auf Linien, die zueinander parallel sind, so dass die zentrale Seele (6) des Antriebsritzels (4) zwischen den Klötzen (5) jedes Paars zirkuliert und daher ein Querführen des Bands oder Riemens (2) gewährleistet, und derart, dass sich die seitlichen Zähne (7) des Antriebsntzeis (4) auf der Rückseite (15) der Klötze (5) abstützen, um das Antreiben des Bands oder Riemens (2) sicherzustellen, wobei jeder der einstückigen Klötze (5) von vier ebenen oder im Wesentlichen ebenen umfänglichen Seiten abgegrenzt ist: eine äußere seitliche Seite (12), eine andere innere seitliche Seite (13), eine andere vordere Querseite (14) und eine letzte hintere Querseite (15),
- wobei sich die innere seitliche Seite (13) geneigt in Bezug zu der Senkrechten der Oberseite (10) und der Unterseite (11) des Bands oder Riemens (2) erstreckt, wobei sich die zwei inneren seitlichen Seiten (13) gegenüber den zwei Klötzen (5) des gleichen Paars derart divergierend erstrecken und angepasst sind, um mit dem Umfang der zentralen Seele (6) des angetriebenen Ritzels (4), zwischen zwei Antriebszähnen (7) dieses Letzteren derart zusammenwirken, dass sie die Querführung des Bands oder Riemens (2) ausführen,
wobei sich die vorderen Querseite (14) und die hintere Querseite (15), die die innere seitliche Seite (13) und äußere seitliche Seite (12) verbinden, geneigt in Bezug zu der Senkrechten der Oberseite (10) und der Unterseite (11) des Bands oder Riemens (2) konvergierend erstrecken, insbesondere, um das Zusammenwirken der Klötze (5) mit den Umlenkstrukturen (3, 4) zu optimieren und insbesondere mit den Zähnen (7) des Antriebsritzels (4), **dadurch gekennzeichnet, dass** sich die äußere seitliche Seite (12) parallel zu den seitlichen Rändern des Bands oder Riemens (2) und senkrecht zu seiner Oberseite (10) und Unterseite (11) erstreckt.

2. Band- oder Riemenstruktur nach Anspruch 1, **dadurch gekennzeichnet, dass** die Klötze (5) jedes Paars voneinander derart entfernt sind, dass sie ein seitliches Spiel mit der Seele (6) des Antriebsritzels (4) in der Größenordnung von 1 bis 5 mm wahren.

3. Band- oder Riemenstruktur nach einem der Ansprüche 1 oder 2, **dadurch gekennzeichnet dass** sie ein Förderband (2) aufweist, das mit einer Stützsohle (20) verbunden ist, die mit Führungsmitteln (22) entlang der äußeren seitlichen Seiten (12) der einstückigen Klötze (5) versehen ist.

4. Band- oder Riemenstruktur nach einem der Ansprüche 1 bis 3, **dadurch gekennzeichnet, dass** der Abstand p zwischen den Paaren von Klötzen (5) im Ruhezustand als leicht kleiner als der Achsabstand der Zähne (7) des Antriebsritzels (4) vorgesehen ist, um die Dehnung unter Belastung des Bands aus Kunststoff (2) zu berücksichtigen.

5. Endlosband oder Endlosriemen für eine Struktur nach einem der Ansprüche 1 bis 4, wobei das Band durch Kunststoff-Extrusionskatandern hergestellt wird und aus einem flachen Teil (9) besteht, der eine Oberseite (10) und einer Unterseite (11) aufweist, die von seitlichen Rändern abgegrenzt sind, wobei die Unterseite (11) Abfolgen von Paaren von Klötzen (5) aufweist, die aus einem Stück mit dem flachen Teil (9) bei dem Extrusions-Kalandervorgang erzielt werden, wobei die zwei Klötze (5) jedes Paars voneinander getrennt sind, und wobei die verschiedenen Paare von Klötzen (5) auf der Breite des flachen Teils (9) auf Linien, die untereinander parallel sind, positioniert sind, wobei jeder der einstückigen Klötze (5) von vier ebenen oder im Wesentlichen ebenen umfänglichen Seiten abgegrenzt ist: eine äußere seitliche Seite (12), eine andere innere seitliche Seite (13), eine andere vordere Querseite (14) und eine letzte hintere Querseite (15),
- wobei sich die innere seitliche Seite (13) geneigt in Bezug zu der Senkrechten der Oberseite (10) und der Unterseite (11) des Bands oder Riemens (2) erstreckt, wobei sich die zwei inneren seitlichen Seiten (13) gegenüber den zwei Klötzen (5) des gleichen Paars divergierend erstrecken,
- wobei sich die vordere Querseite (14) und die hintere Querseite (15), die die innere seitliche Seite (13) und äußere seitliche Seite (12) verbinden, geneigt in Bezug zu der Senkrechten der Oberseite (10) und der Unterseite (11) des Bands oder Riemens (2) konvergierend erstrecken, **dadurch gekennzeichnet, dass** sich die äußere seitliche Seite (12) parallel zu den seitlichen Rändern des Bands oder Riemens (2) und senkrecht zu seiner Oberseite (10) und Unterseite (11) erstreckt.

6. Endlosband oder Endlosriemen nach Anspruch 5, **dadurch gekennzeichnet, dass** es/er einstückige Klötze (5) aufweist, deren vordere Querseite (14) und hintere Querseite (15) durch eine gerundete Endfläche (16) angeschlossen sind und deren Winkel, die die Querseiten (14, 15) und die innere seitliche Seite (13) und äußere seitliche Seite (12) verbinden, sowie die Winkel, die die innere seitliche Seite (13) und die äußere seitliche Seite (12) und die Endseiten (16) verbinden, ebenfalls gerundet sind.

7. Endlosband oder Endlosriemen nach einem der Ansprüche 5 oder 6, **dadurch gekennzeichnet, dass** die innere seitliche Seite (13) der einstückigen Klötze (5) um einen Winkel a in der Größenordnung von 10 bis 20° zur Senkrechten seiner Oberseite (10) und Unterseite (11) geneigt ist.

8. Endlosband oder Endlosriemen nach Anspruch 7, **dadurch gekennzeichnet, dass** die innere seitliche Seite (13) der einstückigen Klötze (5) um einen Winkel a in der Größenordnung von 15° in Bezug zu der Senkrechten seiner Oberseite (10) und Unterseite (11) geneigt ist.

9. Endlosband oder Endlosriemen nach einem der Ansprüche 5 bis 8, **dadurch gekennzeichnet, dass** die vordere Querseite (14) und die hintere Querseite (15) der einstückigen Klötze (5) um einen Winkel b in der Größenordnung von 10 bis 20°, vorzugsweise nahe 15° in Bezug zu der Senkrechen der Oberseite (10) und der Unterseite (11) geneigt sind.

10. Endlosband oder Endlosriemen nach einem der Ansprüche 5 bis 9, **dadurch gekennzeichnet, dass** es/er Längsfäden oder Längskabel (19) aus Material integriert, das dehnungsbeständig ist, wobei die Fäden oder Kabel in der Masse seines flachen Teils (9) in einer passenden Anzahl eingelassen und klug verteilt sind, um eine gleichzeitig geschmeidige und dehnungsbeständige Struktur zu erzielen.
